# EUROPEAN PATENT APPLICATION

(11) **EP 4 610 484 A1**
(43) Date of publication of application: **03.09.2025**
(21) Application number: 24159968.7
(22) Date of filing: 27.02.2024
(51) Int. Cl.: F03D 1/06

(54) **TOOL FOR FIXING A VORTEX GENERATOR TO A BLADE OF A WIND TURBINE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

It is described a tool (1) for fixing a vortex generator (VG) to a blade (2) of a wind turbine. The tool (1) comprises a base body (3) having a first vacuum inlet (4) and a second vacuum inlet (5), the first and second vacuum inlets (4, 5) being configured to be connected to a vacuum source (6); a first sealing profile (7) being arranged at a first side of the base body (3) and forming a first cavity being in a fluid connection with the first vacuum inlet (4); a second sealing profile (8) being arranged at a second side of the base body (3) opposite to the first side and forming a second cavity being in a fluid connection with the second vacuum inlet (5); and a pressing plate (9) being arranged between the first and second sealing profiles (7, 8) and having a pressing surface (10) which is configured to engage the vortex generator (VG).

## Description

### Field of invention

The present invention relates to a tool for fixing a vortex generator to a blade of a wind turbine, a set comprising the tool and a plurality of different pressing plates, an arrangement for fixing a vortex generator to a blade of a wind turbine, and a method of fixing a vortex generator to a blade of a wind turbine.

In the blade production, when installing a vortex generator (VG), glue is required to paste the vortex generator to the blade surface, and air between the vortex generator and the blade needs to be discharged so that the glue is filled between the entire inner surface of vortex generator and blade surface, and there is no gap between them. This process takes a lot of time, and the number of vortex generators on the blade is huge. This process has become a bottleneck in the blade production. With the length of the blade getting longer and the number of vortex generators getting more and more, this problem becomes increasingly prominent.

At present, wooden manual tools are often used to install the vortex generators. Using this wooden pressing tool to press the vortex generator firmly between the fins of the vortex generator to press the same against the blade surface, the purpose of this operation is squeeze out the air between the blade surface and the vortex generator to ensure good adhesion of the tape. This method is slow and requires operators to repeatedly press for a long time, which makes the operators easily tired.

### Summary of the Invention

There may be a need for a tool for fixing a vortex generator to a blade of a wind turbine, which tools facilitates the fixing process and is faster and more accurate. This need may be met by the subject matters according to the independent claims. The present invention is further developed as set forth in the dependent claims.

According to a first aspect of the invention, a tool for fixing a vortex generator to a blade of a wind turbine is provided. The tool comprises a base body having a first vacuum inlet and a second vacuum inlet, the first and second vacuum inlets being configured to be connected to a vacuum source; a first sealing profile being arranged at a first side of the base body and forming a first cavity being in a fluid connection with the first vacuum inlet; a second sealing profile being arranged at a second side of the base body opposite to the first side and forming a second cavity being in a fluid connection with the second vacuum inlet; and a pressing plate being arranged between the first and second sealing profiles and having a pressing surface which is configured to engage the vortex generator (VG).

The new modular vacuum tool adopts a split design and is divided into two main parts, the base body as a base template and the pressing plate as a top plate.

In the context of the present invention, the sealing profile can form a closed, or substantially closed, profile which encloses the cavity. The sealing profile can be made of any elastic material such as an elastomer material, a rubber material, or a foam material. A cross section of the sealing profile can be hollow, for example like a hose. If the sealing profile has a hollow profile in the cross section, it has sufficient stiffness so that it only collapses when the vacuum pressure is applied. The hollow sealing profile can have at least one opening to release air when being compressed. The sealing profile can also have a shape of a skirt, wherein an edge of the skirt forms a direct sealing with the surface of the blade. Also here, the skirt has sufficient stiffness so that it only collapses when the vacuum pressure is applied. The sealing profile can also be a full foam body in the cross section.

The new modular vacuum tool uses the negative pressure generated by the vacuum to replace the original manual pressing operation, so it greatly reduces the working intensity of the operator. The vacuum pump can be connected to the tool through a vacuum pipe, and the cavities on the upper and lower sides of the base body are evacuated into a vacuum environment through the vacuum inlets. The outer surfaces of the upper and lower parts of the tool are subject to atmospheric pressure, which pushes the tool to move toward the blade direction. The pressing plate in the middle area of the tool contacts the outer surface of the vortex generator so that the vortex generator will move along with the pressing plate towards the blade and is pressed onto the blade surface. Since the inner surface of the vortex generator is usually coated with glue, the vortex generator will be pasted onto the blade surface while pressing the vortex generator onto the blade surface.

In an embodiment, the first and second vacuum inlets are each connected to a common vacuum tube, which forms a hollow handle to grip the tool. This tube handle is hollow and can use a connector such as a quick coupling to be fixed to the base body, wherein the connectors on the handle can respectively be connected to the vacuum inlets which also open on the back side of the base body. This will also reduce the work intensity of the operator. The tube handle can be made by a metal material and have good stiffness, and it can strengthen the stiffness of the entire base body and provide enough thrust onto the pressing plate. As the modular vacuum tool is equipped with a tube handle, it can make the tool more convenient to use.

In an embodiment, the pressing plate is replaceable attached to the base body, preferably shiftable by means of a dovetail connection. In an embodiment, the dovetail connection comprises a first dovetail attachment portion at the first side of the base body and a second dovetail attachment portion at the second side of the base body, wherein one of the first and second dovetail attachment portions is continuous, while the other one of the first and second dovetail attachment portions comprises recesses, wherein the pressing plate comprises complementary protrusions which fit into the recesses. This locking feature allows the pressing plate to be fixed on the base body with only a small movement, the pressing plate and base body can be quickly disassembled and assembled.

In an embodiment, the pressing surface comprises a complementary surface to an outer surface of the vortex generator. For example, the pressing plate can be used to support and press the vortex generator, and its inner surface can have many small slots similar to the fins on the back of the vortex generator, it will be used for positioning and fixing the vortex generator.

In an embodiment, the base body comprises an engagement structure for engaging a base body of a similar tool so that the tool and the similar tool can be juxtaposed to each other. Such modular design allows effectively controlling the length of the entire template comprising a plurality of the tools, wherein curvatures of different areas on the blade can be well matched, which make it easier to establish a vacuum environment and to improve the quality of the vortex generator installation.

In an embodiment, the base body comprises a first indicator for vertically positioning the base body to the surface of the blade; and/or the base body comprises a second indicator for indicating an orientation of the base body.

In an embodiment, the base body and the pressing plate are aligned to each other by means of an alignment device, preferably by means of a hole provided in one of the base body and the pressing plate, and a complementary projection at the other one of the base body and the pressing plate. For example, male and female interlocking features can be provided on the pressing plate and base body for easy alignment in longitudinal and transverse directions.

In an embodiment, the tool is configured to be placed to a surface of the blade with the pressing surface of the pressing plate engaging the vortex generator so that the vortex generator is arranged between the pressing surface and the surface of the blade, wherein the vortex generator is pressed against the surface of the blade when the first and second vacuum inlets being supplied with a vacuum by the vacuum source.

In an embodiment, the pressing plate is made of a flexible material, preferably a thermoplast, more preferred polyurethane (TPU).

According to a second aspect of the invention, a set is provided. The set comprises the tool and a plurality of different pressing plates.

According to a third aspect of the invention, an arrangement for fixing a vortex generator to a blade of a wind turbine is provided. The arrangement comprises the tool; a vacuum source; at least one vacuum hose connecting the vacuum source with the first and second vacuum inlets; and a control unit controlling a vacuum pressure from the vacuum source.

In an embodiment, the arrangement further comprises a trolley for moving the vacuum source along the blade.

The new modular vacuum tool can use a quick coupling to connect the tool to a vacuum pipeline. It can be quickly connected and disconnected, and the operation is simple. A vacuum manometer can be installed within the vacuum pipeline, which can display the vacuum value in real time to facilitate the control of the vacuum degree in the tool. The tool can also be equipped with a valve such as a needle valve, a ball valve, etc. to control the establishment of the vacuum environment. After completing the installation of the vortex venerator, the valve is used to release the vacuum environment so that the vacuum tool can be separated from the blade's surface. The modular vacuum tool can also be equipped with a mobile trolley. The vacuum pump or a battery for supplying power to the vacuum pump can be installed on the trolley, so that the vacuum pump is close to the actual use position. The trolley can also be used for storage and transportation of the modular vacuum tool.

According to a fourth aspect of the invention, a method of fixing a vortex generator to a blade of a wind turbine by means of a tool is provided. The method comprises steps of: placing the tool to a surface of the blade with the pressing surface of the pressing plate engaging the vortex generator so that the vortex generator is arranged between the pressing surface and the surface of the blade; supplying a vacuum to the first and second vacuum inlets by the vacuum source, thereby pressing the vortex generator via the pressing surface against the surface of the blade; releasing the vacuum from the first and second vacuum inlets; and removing the tool from the surface of the blade.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a perspective view of a tool for fixing a vortex generator to a blade of a wind turbine in a disassembled state according to an embodiment;
- Fig. 2: shows a perspective view of a tool for fixing a vortex generator to a blade of a wind turbine in an assembled state according to an embodiment;
- Fig. 3: shows a cross-section view of a tool for fixing a vortex generator to a blade of a wind turbine according to an embodiment;
- Fig. 4: shows a perspective view of a tool for fixing a vortex generator to a blade of a wind turbine according to an embodiment;
- Fig. 5: shows a perspective view of a tool for fixing a vortex generator to a blade of a wind turbine according to an embodiment;
- Fig. 6: shows a perspective view of a plurality of tools for fixing a vortex generator to a blade of a wind turbine according to an embodiment;
- Fig. 7: shows a perspective view of a plurality of tools for fixing a vortex generator to a blade of a wind turbine according to an embodiment;
- Fig. 8: shows a plurality of different pressing plates according to an embodiment;
- Fig. 9: shows an arrangement for fixing a vortex generator to a blade of a wind turbine according to an embodiment.

### Detailed Description

The illustrations in the drawings are schematically. It is noted that in different figures, similar or identical elements are provided with the same reference signs.

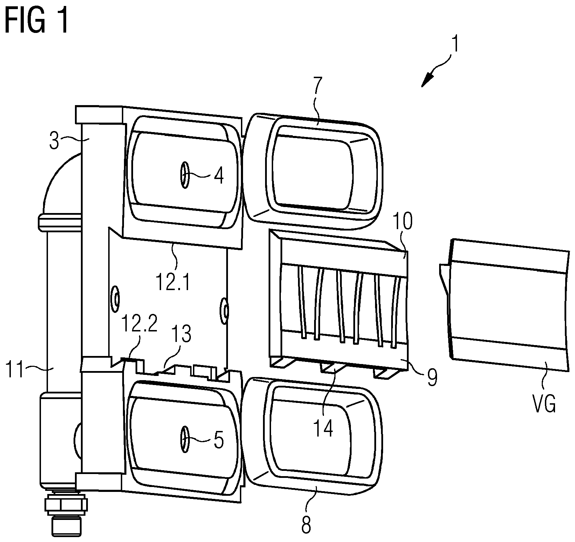

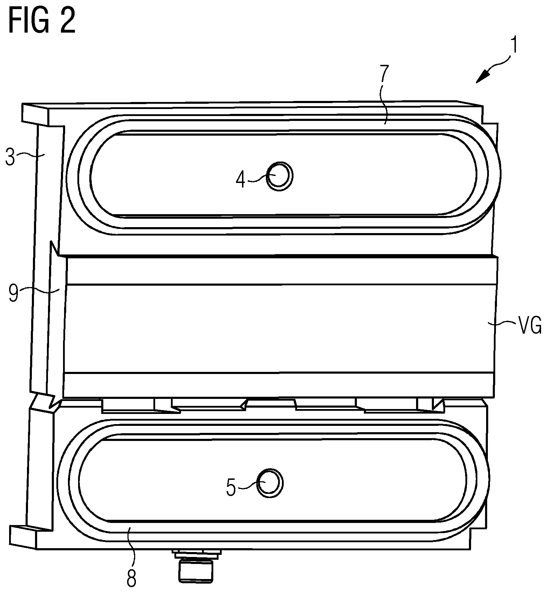

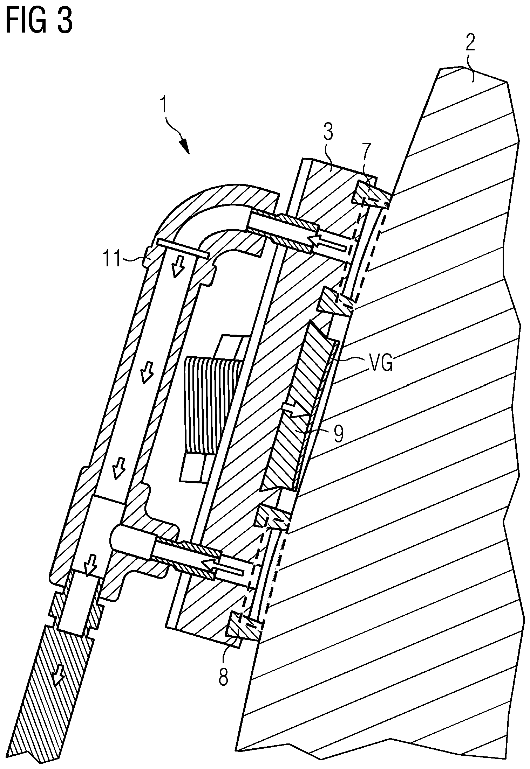

**Fig. 1** shows a perspective view of a tool 1 for fixing a vortex generator VG to a blade 2 of a wind turbine in a disassembled state according to an embodiment, **Fig. 2** shows a perspective view of the tool 1 in an assembled state according to an embodiment, and **Fig. 3** shows a cross-section view of the tool 1. The tool 1 for fixing a vortex generator VG to a blade 2 of a wind turbine comprises a base body 3 having a first vacuum inlet 4 and a second vacuum inlet 5, wherein the first and second vacuum inlets 4, 5 being configured to be connected to a vacuum source 6. The tool 1 further comprises a closed first sealing profile 7 being arranged at a first side of the base body 3 and forming a first cavity being in a fluid connection with the first vacuum inlet 4, and a closed second sealing profile 8 being arranged at a second side of the base body 3 opposite to the first side and forming a second cavity being in a fluid connection with the second vacuum inlet 5. The first and second cavities can have a rounded contour, preferably with an elongated area where a length in parallel to a pressing plate being more than twice large than a height perpendicular thereto. The tool 1 further comprises the pressing plate 9 being arranged between the first and second sealing profiles 7, 8 and having a pressing surface 10 which is configured to engage the vortex generator VG.

The base body 3 can be made of material with a high elastic modulus, such as PLA, which ensures that the base body 3 has sufficient stiffness, so that the thrust generated by the vacuum on the upper and lower sides of the tool 1 can be transferred to the middle area of the tool 1 to push the pressing plate 9 and press the vortex generator VG onto the surface of the blade 2.

The tool 1 is configured to be placed to the surface of the blade 2 with the pressing surface 10 of the pressing plate 9 engaging the vortex generator VG so that the vortex generator VG is arranged between the pressing surface 10 and the surface of the blade 2. The vortex generator VG is pressed against the surface of the blade 2 when the first and second vacuum inlets 4, 5 being supplied with a vacuum by the vacuum source 6. The first and second vacuum inlets 4, 5 can each be connected to a common vacuum tube 11, which can form at the same time a hollow handle to grip the tool 1.

Since a curvature of the blade 2 and the tool 1 might not be completely consistent, the pressing plate 9 can be made of a flexible material, preferably a thermoplast, more preferred polyurethane(TPU). When pressing the vortex generator VG, under the action of the pressure from the base body 3, the pressing plate 9 can undergo an elastic deformation, so that the pressing plate 9 can better fit to the shape of the blade 2, and a larger area of the vortex generator VG can be pressed onto the surface of the blade 2, which will improve the quality of the vortex generator installation.

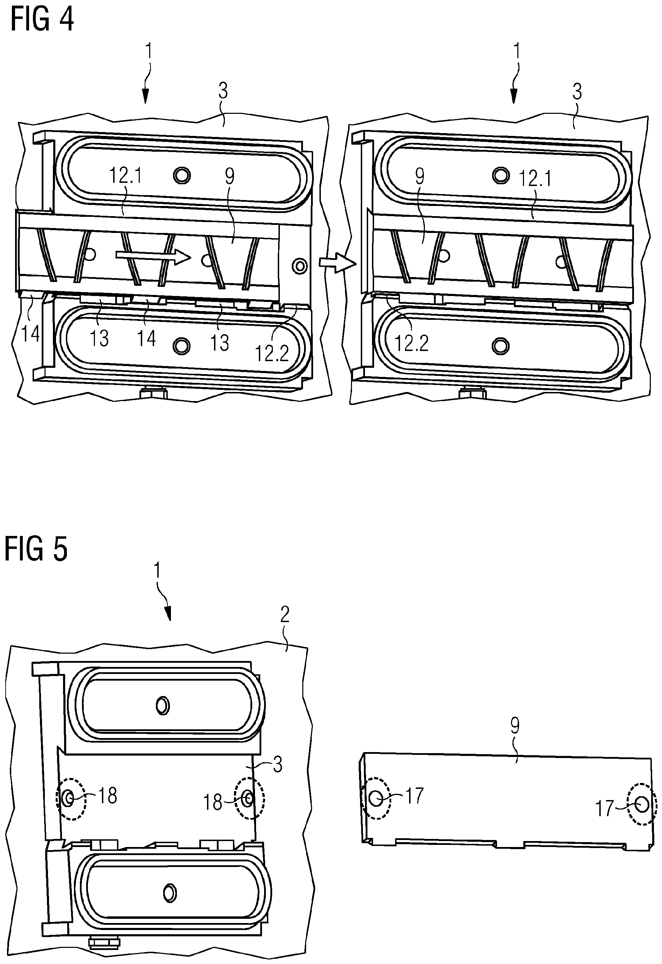

**Fig. 4** shows a perspective view of the tool 1 for fixing a vortex generator VG to a blade 2 of a wind turbine according to an embodiment. The pressing plate 9 is replaceable attached to the base body 3, preferably shiftable by means of a dovetail connection 12.1, 12.2. The dovetail connection 12.1, 12.2 comprises a first dovetail attachment portion 12.1 at the first side of the base body 3 and a second dovetail attachment portion 12.2 at the second side of the base body 3, wherein the first dovetail attachment portion 12.1is continuous, while the second dovetail attachment portion 12.2 comprises recesses 13, wherein the pressing plate 9 comprises complementary protrusions 14 which fit into the recesses 13. After having passed the protrusions 14 through the recesses 13, the pressing plate 9 lies on a counter-surface of the base body 3 as shown at the drawing at the left hand side in Fig. 4. Thereafter, the pressing plate 9 can be shifted into the final position as shown at the drawing at the right hand side in Fig. 4.

**Fig. 5** shows a perspective view of the tool 1 for fixing a vortex generator to a blade 2 of a wind turbine according to an embodiment. The base body 3 and the pressing plate 9 are aligned to each other by means of an alignment device, preferably by means of a hole 17 provided in one of the base body 3 and the pressing plate 9, and a complementary projection 18 at the other one of the base body 3 and the pressing plate 9.

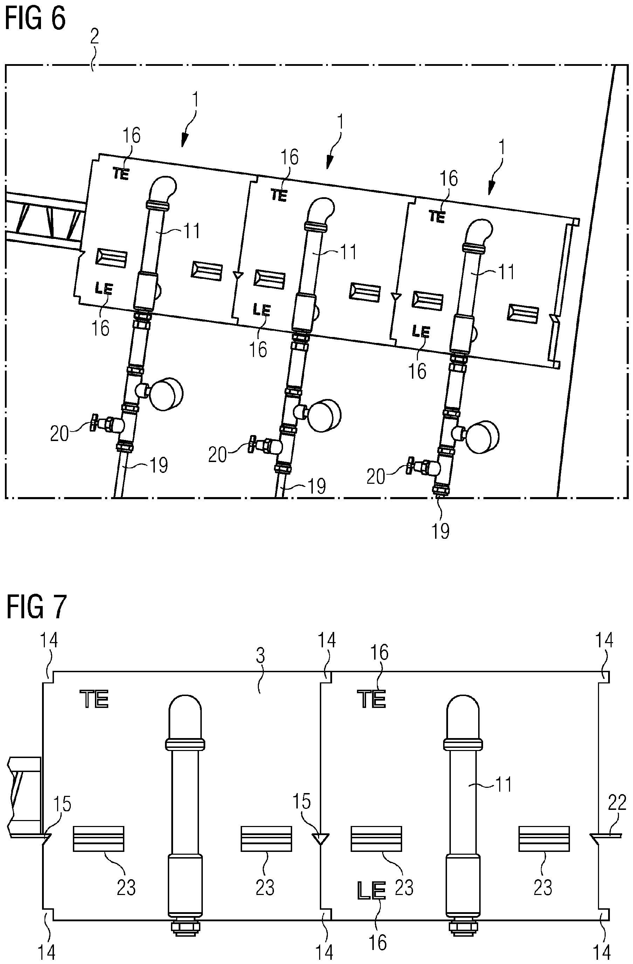

**Fig. 6** shows a perspective view of a plurality of tools 1 for fixing a vortex generator VG to a blade 2 of a wind turbine according to an embodiment, and **Fig. 7** shows a perspective view of the plurality of tools 1 for fixing a vortex generator to a blade of a wind turbine according to an embodiment. The base body 3 comprises an engagement structure 14 for engaging a base body 3 of a similar tool 1 so that the tool 1 and the similar tool 1 can be juxtaposed to each other. The engagement structure can be formed by recesses at one lateral side of the base body 3 and by complementary protrusions at another lateral side of the base body 3 opposite to the one lateral side. For example, rectangular protrusions and grooves can be provided on the left and right sides of the base body 3, which will be used to guide the tool 1. After the first tool 1 is fixed, the subsequent tools 1 can be quickly positioned with this feature, which will reduce the positioning time of the tool 1.

The base body 3 further comprises a first indicator 15 for vertically positioning the base body 3 to the surface of the blade 2, and a second indicator 16 for indicating an orientation of the base body 3. For example, the signs TE and LE are provided on upper and lower sides of the base body, which can ensure that the vortex generator VG can be put the and installed in the right direction. The base body 3 further comprises a window 23 which can also be used for vertically positioning the base body 3 to the surface of the blade 2, for example with reference to an alignment line which has been provided in advance at the blade 2.

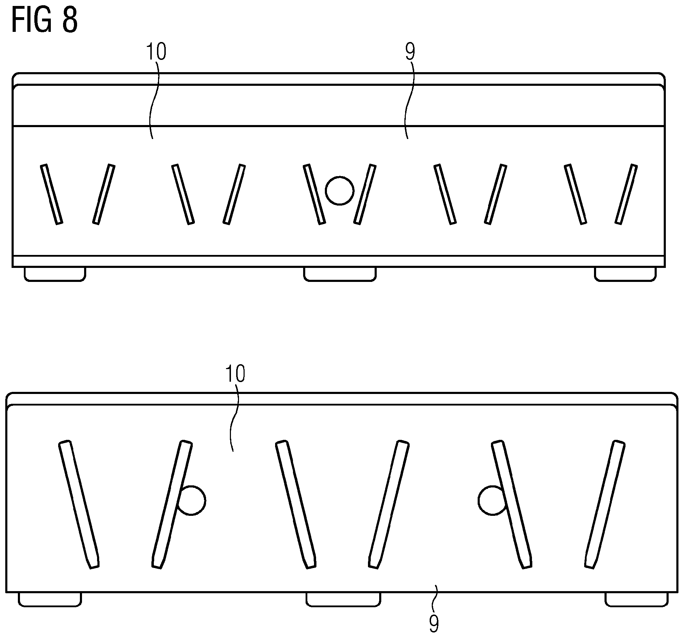

**Fig. 8** shows a plurality of different pressing plates 9 according to an embodiment. The different pressing plates 9 can be included in a set which further comprises the tool 1. It is further shown that the pressing surfaces 10 of the different pressing plates 9 each comprise a complementary surface to an outer surface of the vortex generator VG. In other words, each individual pressing plate 9 can be used for fixing associated vortex generators VG. For example, the pressing plate 9 can be used to support and press the vortex generator VG, and its pressing surface 10 can have many small slots similar to fins on the back of the vortex generator VG, so that the pressing plate 9 can be used for positioning and fixing the vortex generator VG.

In the modular vacuum tool 1, the pressing plates 9 used for different vortex generators VG are designed to have the same outer dimensions as shown in Fig. 8, and a common or same base body 3 can be shared, which means on one and the same base body 3, different pressing plates 9 for different vortex generators VG can be used, which can reduce the number of needed base bodies 3, which makes the tool 1 more convenient to use and reduce the space required for tool handling and storage.

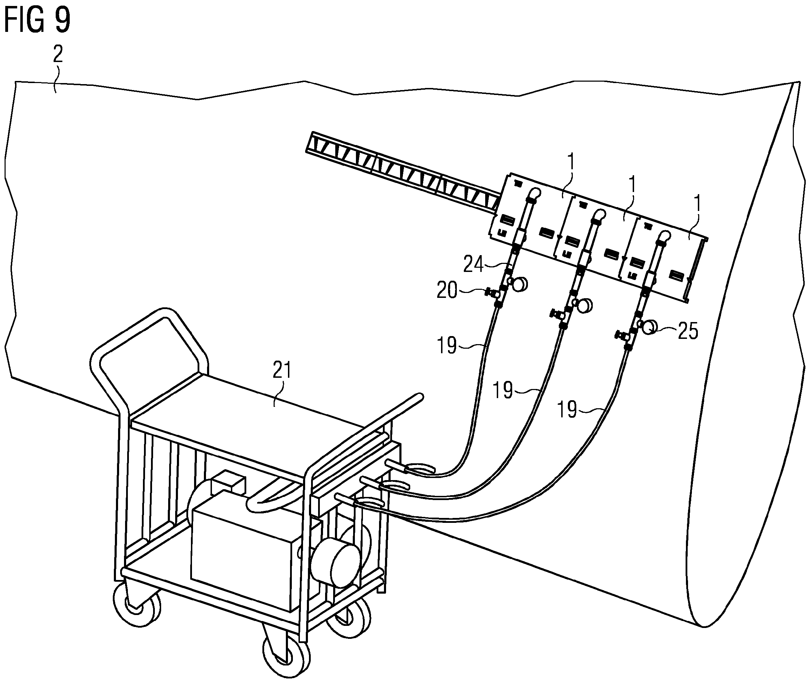

**Fig. 9** shows an arrangement for fixing the vortex generator VG to the blade 2 of the wind turbine according to an embodiment. The arrangement comprises at least one of the tools 1, a vacuum source 6, at least one vacuum hose 19 connecting the vacuum source 6 with the first and second vacuum inlets 4, 5, and a control unit 20 controlling a vacuum pressure from the vacuum source 6. The control unit 20 can be a pressure valve which can be manually opened and closed. In addition, a manometer 25 is arranged between the control unit 20 and the respective vacuum inlet to monitor the pressure. A quick coupling 24 is provided for coupling the respective vacuum hose 19 with the respective tool 1, preferably with the vacuum tube 11 of the respective tool 1.

The arrangement further comprises a trolley 21 for moving the vacuum source 6 along the blade 2.

The operation of the tool 1 and the arrangement is as follows: The tool 1 is placed to a surface of the blade 2 with the pressing surface 10 of the pressing plate 9 engaging the vortex generator VG so that the vortex generator VG is arranged between the pressing surface 10 and the surface of the blade 2. A vacuum is supplied to the first and second vacuum inlets 4, 5 by the vacuum source 6, thereby pressing the vortex generator VG via the pressing surface 10 against the surface of the blade 2. Then, the vacuum is released from the first and second vacuum inlets 4, 5, and the tool 1 is removed from the surface of the blade 2.

The vortex generator installation tool 1 does not require repeated pressing operations by the operator and can greatly reduce the working intensity of the operator. The modular design of the vacuum tool 1 improves the quality of vortex generator installation.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Independent of the grammatical term usage, individuals with male, female or other gender identities are included within the term.

## Claims

1. A tool (1) for fixing a vortex generator (VG) to a blade (2) of a wind turbine, the tool (1) comprising:
a base body (3) having a first vacuum inlet (4) and a second vacuum inlet (5), the first and second vacuum inlets (4, 5) being configured to be connected to a vacuum source (6) ;
a first sealing profile (7) being arranged at a first side of the base body (3) and forming a first cavity being in a fluid connection with the first vacuum inlet (4);
a second sealing profile (8) being arranged at a second side of the base body (3) opposite to the first side and forming a second cavity being in a fluid connection with the second vacuum inlet (5); and
a pressing plate (9) being arranged between the first and second sealing profiles (7, 8) and having a pressing surface (10) which is configured to engage the vortex generator (VG).

2. The tool (1) according to the preceding claim, wherein
the first and second vacuum inlets (4, 5) are each connected to a common vacuum tube (11), which forms a hollow handle to grip the tool (1).

3. The tool (1) according to any one of the preceding claims, wherein
the pressing plate (9) is replaceable attached to the base body (3), preferably shiftable by means of a dovetail connection (12.1, 12.2).

4. The tool (1) according to any one of the preceding claims, wherein
the dovetail connection (12.1, 12.2) comprises a first dovetail attachment portion (12.1) at the first side of the base body (3) and a second dovetail attachment portion (12.2) at the second side of the base body (3), wherein one of the first and second dovetail attachment portions (12.1, 12.2) is continuous, while the other one of the first and second dovetail attachment portions (12.1, 12.2) comprises recesses (13), wherein the pressing plate (9) comprises complementary protrusions (14) which fit into the recesses (13).

5. The tool (1) according to any one of the preceding claims, wherein
the pressing surface (10) comprises a complementary surface adapted to an outer surface of the vortex generator (VG) .

6. The tool (1) according to any one of the preceding claims, wherein
the base body (3) comprises an engagement structure (14) for engaging a base body (3) of a similar tool (1) so that the tool (1) and the similar tool (1) can be juxtaposed to each other.

7. The tool (1) according to any one of the preceding claims, wherein
the base body (3) comprises a first indicator (15) for vertically positioning the base body (3) to the surface of the blade (2); and/or the base body (3) comprises a second indicator (16) for indicating an orientation of the base body (3) .

8. The tool (1) according to any one of the preceding claims, wherein
the base body (3) and the pressing plate (9) are aligned to each other by means of an alignment device, preferably by means of a hole (17) provided in one of the base body (3) and the pressing plate (9), and a complementary projection (18) at the other one of the base body (3) and the pressing plate (9) .

9. The tool (1) according to any one of the preceding claims, wherein
the tool (1) is configured to be placed to a surface of the blade (2) with the pressing surface (10) of the pressing plate (9) engaging the vortex generator (VG) so that the vortex generator (VG) is arranged between the pressing surface (10) and the surface of the blade (2), wherein the vortex generator (VG) is configured to be pressed against the surface of the blade (2) when the first and second vacuum inlets (4, 5) being supplied with a vacuum by the vacuum source (6).

10. The tool (1) according to any one of the preceding claims, wherein
the pressing plate (9) is made of a flexible material, preferably a thermoplast, more preferred polyurethane.

11. Set comprising the tool (1) according to any one of the preceding claims and a plurality of different pressing plates (9) .

12. An arrangement for fixing a vortex generator (VG) to a blade (2) of a wind turbine, the arrangement comprising:
the tool (1) according to any one of the preceding claims;
a vacuum source (6);
at least one vacuum hose (19) connecting the vacuum source (6) with the first and second vacuum inlets (4, 5); and
a control unit (20) controlling a vacuum pressure from the vacuum source (6).

13. The arrangement according to the preceding claim, further comprising a trolley (21) for moving the vacuum source (6) along the blade (2).

14. A method of fixing a vortex generator (VG) to a blade (2) of a wind turbine by means of a tool (1) according to any one of claims 1 to 10, the method comprising steps of:
placing the tool (1) to a surface of the blade (2) with the pressing surface (10) of the pressing plate (9) engaging the vortex generator (VG) so that the vortex generator (VG) is arranged between the pressing surface (10) and the surface of the blade (2);
supplying a vacuum to the first and second vacuum inlets (4, 5) by the vacuum source (6), thereby pressing the vortex generator (VG) via the pressing surface (10) against the surface of the blade (2);
releasing the vacuum from the first and second vacuum inlets (4, 5); and
removing the tool (1) from the surface of the blade (2).
